# EUROPÄISCHE PATENTSCHRIFT

(11) **EP 3 387 394 B1**
(45) Veröffentlichungstag und Bekanntmachung des Hinweises auf die Patenterteilung: **30.06.2021**
(21) Anmeldenummer: 16791632.9
(22) Anmeldetag: 09.11.2016
(51) Int. Cl.: G01F 25/00, G01F 23/296

(54) **VORRICHTUNG ZUR SICHEREN BESTIMMUNG UND/ODER ÜBERWACHUNG EINER PROZESSGRÖSSE**
APPARATUS FOR RELIABLY DETERMINING AND/OR MONITORING A PROCESS VARIABLE
DISPOSITIF DE DÉTERMINATION ET/OU DE SURVEILLANCE FIABLE D'UNE GRANDEUR DE PROCESSUS

(30) Priorität: 11.12.2015 DE 102015121621
(43) Veröffentlichungstag der Anmeldung: 17.10.2018
(73) Patentinhaber: Endress+Hauser SE+Co. KG, 79689 Maulburg (DE)
(72) Erfinder: D'ANGELICO, Sascha, 79595 Rümmingen (DE)
(74) Vertreter: Andres, Angelika Maria
(86) Internationale Anmeldenummer: PCT/EP2016/077109
(87) Internationale Veröffentlichungsnummer: WO 2017/097528

(56) Entgegenhaltungen:
- EP-A2- 1 624 291
- EP-A2- 1 624 291
- DE-A1-102008 032 887
- DE-A1-102009 045 204
- DE-A1-102009 045 204
- US-A- 5 644 299
- US-A- 5 644 299

## Beschreibung

Die Erfindung betrifft eine Vorrichtung zur sicheren Bestimmung und/oder Überwachung zumindest einer Prozessgröße eines Mediums. Bei der Prozessgröße des Mediums handelt es sich beispielsweise um die Viskosität, der Dichte oder einen vorbestimmten Füllstand. Das Medium befindet sich beispielsweise in einem Behälter, einem Tank, oder auch in einer Rohrleitung. Bei dem Medium handelt es sich beispielsweise um eine Flüssigkeit, oder auch ein feststoffliches, pulveriges bzw. körniges Medium.

In der Prozess- und/oder Automatisierungstechnik werden Feldgeräte zur Bestimmung und/oder Überwachung von Prozessgrößen, insbesondere von physikalischen oder chemischen Prozessgrößen, eingesetzt. Ein Feldgerät umfasst typischerweise zumindest eine zumindest teilweise und zumindest zeitweise mit dem Prozess in Berührung kommende Sensoreinheit. Als Feldgeräte werden im Rahmen der vorliegenden Anmeldung im Prinzip alle Messgeräte bezeichnet, die prozessnah eingesetzt werden und die prozessrelevante Informationen liefern oder verarbeiten. Dabei handelt es sich beispielsweise um Füllstandsmessgeräte, Durchflussmessgeräte, Druck- und Temperaturmessgeräte, pH-Redoxpotentialmessgeräte, Leitfähigkeitsmessgeräte, usw., welche die entsprechenden Prozessgrößen Füllstand, Durchfluss, Druck, Temperatur, pH-Wert bzw. Leitfähigkeit erfassen. Solche Feldgeräte werden in unterschiedlichen Ausgestaltungen von der E+H Gruppe hergestellt und vertrieben.

Bei einer Vielzahl dieser Feldgeräte basiert die mit dem Prozess in Berührung kommende Sensoreinheit auf einer mechanisch schwingfähigen Einheit. Derartige sogenannte vibronische Sensoren weisen im Falle von Füllstandsmessgeräten beispielsweise eine Schwinggabel, einen Einstab oder eine Membran als mechanisch schwingfähige Einheit auf. Diese wird im Betrieb mittels einer Anrege-/Empfangseinheit, üblicherweise in Form einer elektromechanischen Wandlereinheit zu mechanischen Schwingungen angeregt, welche wiederum ein piezoelektrischer Antrieb oder ein elektromagnetischer Antrieb sein kann. Im Falle von Durchflussmessgeräten mit zumindest einer schwingfähigen Einheit kann diese aber auch als schwingfähiges Rohr ausgebildet sein, welches von dem jeweiligen Medium durchflossen wird, wie beispielsweise in einem nach dem Coriolis-Prinzip arbeitenden Sensor.

Der Einfachheit halber beschränkt sich die nachfolgende Beschreibung des vibronischen Sensors auf Füllstandsmessgeräte mit einer schwingfähigen Einheit, wobei an geeigneten Stellen auf andere mögliche Anwendungen der erfindungsgemäßen Lösung verwiesen wird. Entsprechende auf vibronischen Sensoren basierende Füllstandsmessgeräte werden von der Anmelderin beispielsweise unter der Bezeichnung LIQUIPHANT oder SOLIPHANT vertrieben.

Die zugrundeliegenden Messprinzipien sind im Wesentlichen bekannt. Die Anrege-/Empfangseinheit regt die mechanisch schwingfähige Einheit mittels eines elektrischen Anregesignals zu mechanischen Schwingungen an. Umgekehrt kann die Anrege-/Empfangseinheit die mechanischen Schwingungen der mechanisch schwingfähigen Einheit empfangen und in ein elektrisches Empfangssignal umwandeln. Bei der Anrege-/Empfangseinheit handelt es sich entsprechend entweder um eine separate Anrege-/Empfangseinheit und eine separate Empfangseinheit, oder um eine kombinierte Anrege-/Empfangseinheit. Aus den empfangenen Schwingungen der mechanisch schwingfähigen Einheit (Eigenfrequenz, Resonanzfrequenz, Phase in Bezug auf Anregung, Amplitude und/oder deren Änderungen) wird dann mindestens eine Prozessgröße ermittelt bzw. bestimmt und/oder überwacht.

Je nach Einsatzgebiet werden bei vibronischen oder sonstigen Sensoren sehr hohe Anforderungen an die funktionale Sicherheit gestellt. Die funktionale Sicherheit wird in der Regel anhand verschiedener Stufen oder sogenannter "Saftety Integrity Level" (SIL) klassifiziert. Eine Möglichkeit, einen funktional sicheren Sensor bereitzustellen, besteht darin, mehrere Sensoren zu verwenden, und damit eine gewisse Redundanz zu erreichen. Eine weitere Möglichkeit besteht darin, mögliche Fehlfunktionen des Sensors zu überwachen und anzuzeigen.

Vorteilhaft ist es hierbei, wenn für Sensoren, die während der Anwendung in einem eingebauten Zustand vorliegen, die Fehlfunktion im eingebauten Zustand überwacht und angezeigt werden kann. In besonders hohem Maße vorteilhaft ist es, wenn die Überwachung möglicher Fehlfunktionen während des Betriebs und damit simultan zur Bestimmung und/oder Überwachung der Prozessgröße erfolget.

Im Stand der Technik sind unterschiedliche Verfahren zur Detektion einer Vielzahl von Fehlfunktionen vibronischer Sensoren bekannt geworden.

Eine häufige Fehlfunktion eines vibronischen Sensors ist Ansatz an der mechanisch schwingfähigen Einheit des vibronischen Sensors. In der DE 0000 100 147 24 A1 wird beispielsweise Ansatz detektiert, indem zwei unterschiedliche Moden der mechanisch schwingfähigen Einheit ausgewertet werden, wobei die beiden Moden jeweils unterschiedlich auf Ansatz reagieren. In der DE 0000 103 282 96 A1 wird dagegen Ansatz anhand der Überschreitung eines Grenzwerts für die Schwingungsfrequenz der mechanisch schwingfähigen Einheit detektiert. Um Ansatz von sich ändernden Prozessbedingungen und/oder Prozessgrößen unterscheiden zu können, wird der Grenzwert unter Berücksichtigung von gemessenen und/oder berechneten Abhängigkeiten der Frequenz von maximal und minimal möglichen Prozessbedingungen und/oder den zu überwachenden und/oder zu bestimmenden Prozessgrößen ermittelt. In der DE 10 2009 045 204 A1 wird Ansatz mittels eines Frequenzsuchdurchlaufs und anhand der Abklingrate der Amplitude detektiert. Der Frequenzsuchdurchlauf befindet sich dabei vorzugsweise innerhalb eines schmalen Frequenzbands um die Resonanzfrequenz.

Des Weiteren können häufige Fehlfunktionen nicht an der mechanisch schwingfähigen Einheit selbst, sondern an der Anrege-/Empfangseinheit der mechanisch schwingfähigen Einheit vorliegen. Ein Beispiel dafür ist Kabelbruch. Liegt als Anrege-/Empfangseinheit ein Piezoelement vor, ist eine weitere mögliche Fehlfunktion beispielsweise die Depolarisation des anregenden Piezoelements. In der DE 10 2004 027 397 A1 ist ein Verfahren zu Kabelbruchdetektion mittels eines zweiten Schwingkreises und einer Rückkoppelungsschleife angegeben. In der DE 10 2008 032 887 A1 ist eine Vorrichtung und ein Verfahren angegeben, in dem Impedanzen, Kapazitäten und Induktivitäten einer Testeinheit ausgewertet werden. Aus dieser Offenbarung geht hervor, dass die Testeinheit zum Aufdecken von Kabelbrüchen, d.h. eines Defekts in der Anrege-/Empfangseinheit (hier vorzugsweise ein Piezoelement) verwendet wird.

Nachteilig an den im Stand der Technik bekannt gewordenen technischen Lösungen zur Aufdeckung von Fehlfunktionen ist, dass die technische Lösung immer auf eine vorgegebene Fehlfunktion zugeschnitten ist. Insbesondere ist keine technische Lösung bekannt geworden, mit der gleichzeitig eine Fehlfunktion der mechanisch schwingfähigen Einheit sowie eine Fehlfunktion der Anrege-/Empfangseinheit, welche die mechanisch schwingfähige Einheit anregt, detektiert und klassifiziert werden kann.

Möchte man für einen funktional sicheren vibronischen Sensor eine Reihe unterschiedlicher Fehlfunktionen anzeigen können, müssten daher beispielsweise die oben genannten technische Lösungen gleichzeitig realisiert und kombiniert werden. Aufgrund der Anforderungen an standardisierte Lösungen sowie konstruktive Einschränkungen ist dies nicht immer möglich oder ist mit einem hohen Aufwand und damit auch hohen Kosten verbunden. Des Weiteren kann es auch kontraproduktiv sein, einen vibronischen Sensor mit vielen unterschiedlichen Komponenten, welche die funktionelle Sicherheit in Bezug auf eine spezifische Funktionalität überwachen sollen, bereitzustellen: mit jeder zusätzlichen Komponente wird auch eine zusätzliche Möglichkeit des Versagens ebenjener Komponente bzw. ein Versagen des Zusammenwirkens der unterschiedlichen Komponenten eingeführt. Es ist also wünschenswert, anhand einer einzigen technischen Lösung eine Reihe verschiedener Fehlfunktionen eines vibronischen Sensors aufdecken und zuordnen zu können.

Der Erfindung liegt daher die Aufgabe zugrunde, einen vibronischen Sensor anzugeben, der auf einfache Weise möglichst viele verschiedene Fehlfunktionen an der mechanische schwingfähigen Einheit und/oder der Anrege-/Empfangseinheit der mechanisch schwingfähigen Einheit aufdecken kann.
Die Aufgabe wird gelöst durch eine Vorrichtung zur Bestimmung und/oder Überwachung der Viskosität, der Dichte und/oder eines vorbestimmten Füllstandes eines Mediums in einem Behälter, einem Tank oder einer Rohrleitung, wobei es sich bei dem Medium um eine Flüssigkeit oder ein feststoffliches, pulvriges oder körniges Medium handelt, mit einer Anrege-/Empfangseinheit, die eine mechanisch schwingfähige Einheit zu Schwingungen anregt, wobei eine mit der Anrege-/Empfangseinheit verbundene Regel-/Auswerteeinheit mit einem Messzweig und einem davon getrennten Überprüfungszweig vorgesehen ist. Der Messzweig ist dazu ausgestaltet, die Anrege-/Empfangseinheit mit einem Anregesignal zu beaufschlagen, die Schwingungen der mechanisch schwingfähigen Einheit zu empfangen, und aus den empfangenen Schwingungen die Viskosität, die Dichte und/oder den vorbestimmten Füllstand zu bestimmen und/oder zu überwachen. Der Überprüfungszweig ist dazu ausgestaltet, die Anrege-/Empfangseinheit mit einem Anregesignal zu beaufschlagen, die Schwingungen der mechanisch schwingfähigen Einheit zu empfangen, und aus den empfangenen Schwingungen mindestens eine erste und eine davon verschiedene zweite Fehlfunktion der mechanisch schwingfähigen Einheit und/oder der Anrege-/Empfangseinheit zu bestimmen, wobei das Anregesignal des Überprüfungszweiges eine sich kontinuierliche ändernde Frequenz aufweist, die durch eine Frequenz/Zeit Funktion beschrieben wird und mehrere Moden der mechanisch schwingfähigen Einheit durchläuft.
Im vollständigen Spektrum des Schwingsystems sind theoretisch alle Informationen über den Zustand des Schwingsystems enthalten, wobei das Schwingsystem aus der mechanisch schwingfähigen Einheit und der Anrege-/Empfangseinheit besteht. Um das vollständige Spektrum zu gewinnen, muss prinzipiell das System schrittweise mit mehreren Frequenzen aus einem breiten Frequenzband angeregt werden, um dann nach dem jeweiligen Einschwingvorgang bei jeder dieser schrittweise angeregten Frequenzen die Amplitude und/oder Phase der Schwingungen zu ermitteln. Dabei muss das Frequenzband alle diejenigen Moden umfassen, die auf mögliche relevante Fehlfunktionen sensitiv sind. Eine derartige Aufnahme des Spektrums ist sehr aufwändig, und daher während der Messung oder abwechselnd zu Messung kaum praktikabel.
Eine gute Annäherung kann daher damit gewonnen werden, den Bereich des Amplituden- und/oder des Phasenspektrums, welcher auf mögliche relevante Fehlfunktionen sensitiv ist, anhand einer Frequenz/Zeit Funktion zu durchlaufen. Dabei durchläuft die Frequenz/Zeit Funktion mehrere Moden der mechanisch schwingfähigen Einheit. Die spezifische Ausgestaltung der Frequenz/Zeit Funktion ergibt sich für den Fachmann in Abhängigkeit von der Ausgestaltung des vibronischen Sensors. Die Änderungsrate der Frequenz sollte dabei so gewählt sein, dass die durch den Überprüfungszweig vorgenommene Funktionsüberprüfung möglichst zügig vorgenommen werden kann, und gleichzeitig das Vorhandensein möglicher Fehlfunktionen deutlich erkannt werden kann. Zügig bedeutet, dass die Zeitspanne, in der die gesamte Frequenz/Zeit Funktion durchlaufen wird, in einer ähnlichen Größenordnung liegen sollte bzw. im optimalen Fall sogar kleiner ist als die Zeitspanne, in der typischerweise während der Anwendung Änderungen in der Prozessgröße und/oder in den Prozessbedingungen stattfinden. Deutlich bedeutet, dass sich eindeutige geeignete Kriterien finden lassen, die mindestens zwei Fehlfunktionen gegen die Einflüsse der Prozessgröße und variabler Prozessbedingungen abzugrenzen, so dass ein Über- oder Unterschreiten des jeweiligen Kriteriums eine sichere Anzeige für das Vorhandensein der jeweiligen Fehlfunktion ist. Je nach Ausgestaltung des vibronischen Sensors und der spezifischen Fehlfunktion lässt sich anhand der Kriterien auch genau feststellen, welche der mindestens zwei Fehlfunktionen vorliegt, so dass die Erfindung nicht nur das Vorhandensein der mindestens zwei verschiedenen Fehlfunktionen, sondern auch eine eindeutige und damit selektive Bestimmung der mindestens zwei verschiedenen Fehlfunktionen ermöglicht.

Die Information über das Vorhandensein möglicher Fehlfunktionen wird also anhand von vorgegebenen, berechneten und/oder gemessenen Kriterien aus der Gestalt des Amplituden- und /oder des Phasenspektrums gewonnen. Eine Möglichkeit ist beispielsweise, aus der Lage der Frequenzen von vorgegebenen Moden zueinander eine Fehlfunktion zu bestimmen. Eine weitere Möglichkeit ist, aus den Amplitudenverhältnissen und/oder Phasendifferenzen zweier oder mehrerer vorbestimmter Moden eine Fehlfunktion zu bestimmen. Die Anzahl der unterschiedlichen Moden, die zur Detektion einer bestimmten Fehlfunktion durchlaufen werden müssen und auch die Frequenz/Zeit Funktion hängen dabei von der Ausgestaltung des vibronischen Sensors sowie von der spezifischen Fehlfunktion ab.

Die Regel-/Auswerteeinheit ist dazu ausgestaltet, die von der Anrege/Empfangseinheit empfangenen Schwingungen jeweils im Messzweig und Überprüfungszweig weiterzuverarbeiten bzw. die von der Anrege-/Empfangseinheit empfangenen Schwingungen an den Messzweig und den Überprüfungszweig weiterzugeben. Weiter ist die Regel-/Auswerteeinheit dazu ausgestaltet, die unterschiedlichen Komponenten der Vorrichtung zu regeln und auszuwerten. In der Regel-/Auswerteeinheit bzw. einer oder mehrerer Komponenten der Regel-/Auswerteeinheit sind auch die Kriterien für die Bestimmung der verschiedenen Fehlfunktionen hinterlegt. Eine Möglichkeit ist auch, dass die Regel-/Auswerteeinheit die Kriterien für die Bestimmung der mindestens zwei Fehlfunktionen aus gemessenen und/oder berechneten Zusammenhängen zwischen der Prozessgröße, der mechanisch schwingfähigen Einheit, der Anrege-/Empfangseinheit, und/oder dem Medium ermittelt.
Der Kern der Erfindung ist also die Bereitstellung eines Überprüfungszweiges, der dazu ausgestaltet ist, eine hinreichend gute Annährung an das vollständige Amplituden- und/oder Phasenspektrums des Schwingsystems bestehend aus der mechanisch schwingfähigen Einheit und der Anrege-/Empfangseinheit zu erzeugen. Damit können auf einfache Art und Weise gleichzeitig Fehlfunktionen an der mechanisch schwingfähigen Einheit und an der Anrege-/Empfangseinheit der mechanisch schwingfähigen Einheit detektiert werden. Idealerweise werden dabei anhand definierter Kriterien möglichst viele verschiedene Fehlfunktionen überwacht und unterschieden. Die erfindungsgemäße Vorrichtung sieht dabei vor, mindestens zwei voneinander verschiedene Fehlfunktionen zu bestimmen. Wird eine geeignete Frequenz/Zeit Funktion gewählt, kann zumindest zusätzlich noch das Vorhandensein vieler unterschiedlicher Fehlfunktionen angezeigt werden können.

In einer Weiterbildung der Erfindung weist der Überprüfungszweig einen Microcontroller auf, wobei der Microcontroller dazu ausgestaltet ist,
die sich kontinuierlich ändernde Frequenz des Anregesignals zu steuern.

In einer Variante der erfindungsgemäßen Vorrichtung ist der Microcontroller dazu ausgestaltet, aus den empfangenen Schwingungen die Schwingungen mit der Frequenz des Anregesignals herauszufiltern. Der Microcontroller ist in dieser Variante also dazu in der Lage, sowohl die Anregefrequenz vorzugeben, als auch aus den empfangenen Schwingungen genau diejenigen herauszufiltern, welche die Frequenz der Anregefrequenz aufweisen, bzw. in einem schmalen Band um die Anregefrequenz liegen.

In einer Weiterbildung der Erfindung sind der Microcontroller und die Regel-/Auswerteeinheit dazu ausgestaltet,
- aus den zu der vorgegebenen Frequenz gehörenden empfangenen Schwingungen den Absolutwert der Amplitude zu bestimmen und
- aus dem Absolutwert der Amplitude und der vorgegebenen Frequenz/Zeit Funktion eine einhüllende Funktion zu erstellen,
wobei die Regel-/Auswerteeinheit anhand der einhüllenden Funktion und/oder der Phase der empfangenen Schwingung und der vorgegebenen Frequenz/Zeit Funktion die mindestens zwei verschiedenen Fehlfunktionen der mechanisch schwingfähigen Einheit und/oder der Anrege-/Empfangseinheit bestimmt.

Es wird also anhand des Microcontrollers und der Regel-/Auswerteeinheit aus dem Verlauf der Absolutwerte der Amplitude der empfangenen Schwingungen des Überprüfungszweiges eine Funktion gewonnen, die den zeitlichen Verlauf der Absolutwerte der Amplituden einhüllt. Der Verlauf der einhüllenden Funktion des Absolutwertes der Amplitude als Funktion der Frequenz (oder als Funktion der Zeit) kann dann ausgewertet werden. Die mindestens zwei verschiedenen Fehlfunktionen sind anhand der dergestalt ermittelten einhüllenden Funktion im Amplitudenspektrum und/oder im Phasenspektrum erkennbar. Je nach Ausgestaltung der Erfindung sind die mindestens zwei Fehlfunktionen sogar unterscheidbar, damit ermöglicht die Erfindung gegebenenfalls auch eine eindeutige Bestimmung der Fehlfunktion und damit eine spezifische bzw. selektive Fehlerdiagnose.

In einer Ausgestaltung der Erfindung weist dabei der Überprüfungszweig zusätzlich einen variablen Frequenzfilter auf, wobei der variable Frequenzfilter dazu ausgestaltet ist, aus den empfangenen Schwingungen die Schwingungen einer vorgegebenen Frequenz herauszufiltern, und wobei der Microcontroller dazu ausgestaltet ist, dem variablen Frequenzfilter die Frequenz des Anregesignals als die zu filternde Frequenz vorzugeben. In dieser Variante der Erfindung ist die Vorrichtung also anhand des variablen Frequenzfilters dazu in der Lage, aus den empfangenen Schwingungen genau diejenigen herauszufiltern, welche die Frequenz der Anregefrequenz aufweisen, bzw. in einem schmalen Band um die Anregefrequenz liegen. Der variable Frequenzfilter bzw. Bandpass wird in dieser Variante vom Microcontroller gesteuert.

In einer Weiterbildung dieser Ausgestaltung der Erfindung ist dem Frequenzfilter des Überprüfungszweiges ein Spitzenwertgleichrichter nachgeschaltet. Die Regel-/Auswerteeinheit ist dazu ausgestaltet, anhand der durch den Spitzenwertgleichrichter ermittelten Werte und der vorgegebenen n Frequenz/Zeit-Funktion die mindestens zwei verschiedenen Fehlfunktionen der mechanisch schwingfähigen Einheit und/oder der Anrege-/Empfangseinheit zu bestimmen.

In einer Variante der Erfindung befindet sich ein Schalter zwischen der Anrege-/Empfangseinheit und der Regel-/Auswerteeinheit. Der Schalter wird von der Regel-/Auswerteeinheit so angesteuert, dass er die Anrege-/Empfangseinheit jeweils entweder mit dem Messzweig oder mit dem Überprüfungszweig verbindet. In dieser Variante der Erfindung muss die Messung also für die Dauer des Durchlaufs der Frequenz/Zeit Funktion unterbrochen werden.

In einer dazu alternativen Variante der Erfindung befindet sich ein Addierer zwischen der Anrege-/Empfangseinheit und der Regel-/Auswerteeinheit, wobei der Addierer so ausgestaltet ist, dass er aus dem Anregesignal des Messzweiges und dem Anregesignal des Überprüfungszweiges ein gemeinsames Anregesignal erzeugt, dass die Anrege-/Empfangseinheit steuert. Der Messzweig bestimmt und/oder überwacht aus den empfangenen Schwingungen die Prozessgröße. Der Überprüfungszweig leistet anhand der empfangenen Schwingungen die Überwachung der mindestens zwei verschiedenen Fehlfunktionen.

In dieser besonders vorteilhaften Variante der Erfindung kann die Überwachung möglicher Fehlfunktionen also simultan zur Bestimmung und/oder Überwachung der Prozessgröße erfolgen.

In einer Weiterbildung der Erfindung handelt es sich bei zumindest einer der mindestens zwei Fehlfunktionen um eine Fehlfunktion der mechanisch schwingfähigen Einheit. Bei der Fehlfunktion der mechanisch schwingfähigen Einheit kann es sich um Ansatz, Korrosion und/oder Abrasion an der mechanisch schwingfähigen Einheit handeln.

Es ist im Stand der Technik bekannt geworden, dass sich Ansatz bzw. Korrosion an der mechanisch schwingfähigen Einheit unterschiedlich auf die verschiedenen Moden der mechanisch schwingfähigen Einheit auswirkt. Liegen im durchlaufenen Frequenzbereich der Frequenz/Zeit Funktion also gerade solche Moden, die unterschiedlich auf Ansatz bzw. Korrosion reagieren, kann aus der Lage der Frequenzen zueinander anhand eines Kriteriums Ansatz bzw. Korrosion detektiert werden.

In einer Ausgestaltung der Erfindung handelt es sich bei der mechanisch schwingfähigen Einheit um eine Schwinggabel mit zwei Zinken. In diesem Fall handelt es sich bei einer der mindestens zwei Fehlfunktionen um eine Blockierung der beiden Zinken und/oder eine Verbiegung von zumindest einem der beiden Zinken. Die Blockierung und/oder die Verbiegung der Zinken der Schwinggabel kann beispielsweise durch Verklumpungen von feststofflichen Bestandteilen des Mediums verursacht werden.

In einer alternativen Ausgestaltung handelt es sich bei der mechanisch schwingfähigen Einheit um eine Membran. In diesem Fall handelt es sich bei einer der mindestens zwei Fehlfunktionen um einen Riss in der Membran und/oder eine Perforation der Membran.

In einer Ausgestaltung der Erfindung handelt es sich bei der Anrege-/Empfangseinheit um mindestens ein Piezoelement. In diesem Fall handelt es sich bei einer der mindestens zwei Fehlfunktionen um einen Bruch des Piezoelements, eine Depolarisation des Piezoelements, und/oder eine falsche elektrische Vorspannung des Piezoelements.

In einer Weiterbildung der Erfindung ist die Anrege-/Empfangseinheit an die mechanische schwingfähige Einheit geklebt, dann handelt es sich bei einer der mindestens zwei Fehlfunktionen um eine Ablösung der Klebestelle.

In einer Ausgestaltung der Erfindung ist die Anrege-/Empfangseinheit durch mindestens ein Kabel und/oder einen Stecker mit der Elektronikeinheit verbunden. In diesem Fall handelt es sich bei einer der mindestens zwei Fehlfunktionen um einen Bruch und/oder einen Isolationsdefekt des mindestens einen Kabels und/oder Steckers zwischen Anrege-/Empfangseinheit und/oder der Elektronikeinheit.

In einer weiteren Ausgestaltung handelt es sich bei einer der mindestens zwei Fehlfunktionen um einen Kurzschluss in der Anrege-/Empfangseinheit und/oder Kondensation an der Anrege/Empfangseinheit.

Die Erfindung wird anhand der nachfolgenden Figuren näher erläutert. Es zeigen
Fig. 1: eine Ausgestaltung der erfindungsgemäßen Vorrichtung
Fig. 2a,b das Anregesignal gemäß des Überprüfungszweiges der erfindungsgemäßen Vorrichtung
Fig. 3: ein anhand des Überprüfungszweiges gewonnenes Amplitudenspektrum.

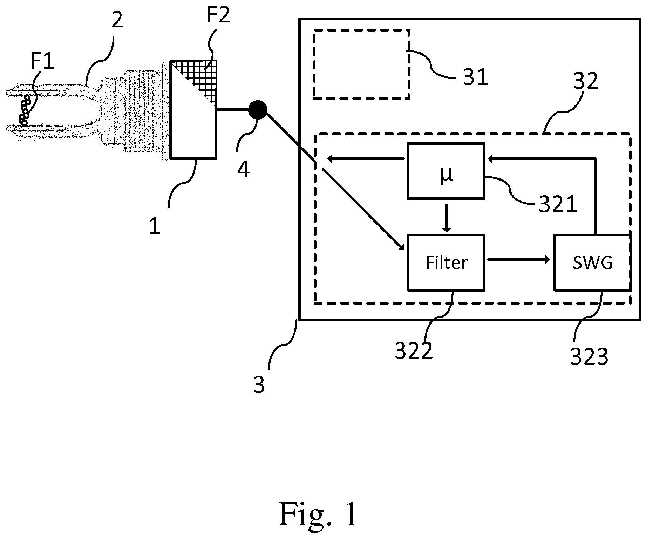

In Fig. 1 ist eine Ausgestaltung der erfindungsgemäßen Vorrichtung dargestellt. Die mechanisch schwingfähige Einheit 2 ist hier als eine Schwinggabel mit zwei Zinken realisiert. Zur Anregung der mechanisch schwingfähigen Einheit 2 ist die Anrege-/Empfangseinheit 1 vorgesehen, beispielsweise in Form eines Piezoelements oder alternativ anhand eines induktiven Wandlerelements. Mit der Anrege-/Empfangseinheit 1 ist die Regel-/Auswerteeinheit 3 verbunden, die dazu ausgestaltet ist, das Piezoelement mit einer Spannung zu beaufschlagen und aus den empfangenen Schwingungen die Prozessgröße und mindestens zwei verschiedene Fehlfunktionen F1, F2,.. der Schwinggabel und/oder des Piezoelements zu bestimmen und/oder zu überwachen. Zur Bestimmung und/oder Überwachung der Prozessgröße ist der Messzweig 31 vorgesehen, während für die Bestimmung der mindestens zwei verschiedenen Fehlfunktionen F1, F2,... der Überprüfungszweig 32 vorgesehen ist.

In diesem Ausführungsbeispiel der Erfindung ist ein Schalter 4 zwischen der Anrege-/Empfangseinheit 1 und der Regel-/Auswerteeinheit 3 vorgesehen. In diesem Fall kann die Bestimmung und/oder Überwachung der Prozessgröße abwechselnd zu Bestimmung der mindestens zwei verschiedenen Fehlfunktionen F1, F2,... vorgenommen werden.

In einer alternativen Ausführungsform der Erfindung befindet sich ein Addierer zwischen der Anrege-/Empfangseinheit 1 und der Regel-/Auswerteeinheit 3, wobei der Addierer aus der Anregespannung des Messzweiges 31 und der Anregespannung des Überprüfungszweiges 32 eine gemeinsame Anregespannung erzeugt.

Der Überprüfungszweig 32 weist in dieser Ausführungsform der Erfindung einen Microcontroller 321, einen variablen Frequenzfilter 322 und einen Spitzenwertgleichrichter 323 auf. Der Microcontroller 321 regelt dabei gleichzeitig die Frequenz der sich mir der Frequenz/Zeit Funktion ändernden Anregespannung, und führt den variablen Frequenzfilter 322 auf die jeweilige Anregefrequenz bzw. auf ein schmales Band (Bandpass) um die Anregefrequenz des Überprüfungszweiges 32 nach.

Der Spitzenwertgleichrichter 323 ist dem variablen Frequenzfilter 322 nachgeschaltet. Der Microcontroller 321 kann dann anhand der empfangenen Schwingungen beispielsweise eine einhüllende Funktion des Amplituden- und/oder Phasenspektrums erstellen, und weiter anhand der einhüllenden Funktion und vorgegebener Kriterien überprüfen, ob die mindestens zwei Fehlfunktionen F1, F2,... der Schwinggabel und/oder des Piezoelements vorliegen.

In einer alternativen Ausführungsform der Erfindung ist der Microcontroller 321 dazu ausgestaltet, die oben genannten technischen Aufgaben des variablen Frequenzfilters 322 und des Spitzenwertgleichrichters 323 auszuführen.

Auch sind in Fig. 1 eine Fehlfunktion F1 an der Schwinggabel (bzw. an der mechanisch schwingfähigen Einheit 2) und eine weitere, von der ersten Fehlunktion F1 verschiedene Fehlfunktion F2 an der Anrege-/Empfangseinheit 1 dargestellt. Die hier dargestellte Fehlfunktion F1 der Schwinggabel ist eine Blockierung bzw. eine Verklemmung der Schwinggabel, beispielweise aufgrund eines zähen, klebrigen und/oder körnigen Mediums. Die hier dargestellte Fehlfunktion F2 des Piezoelements ist ein Bruch des Piezoelements.

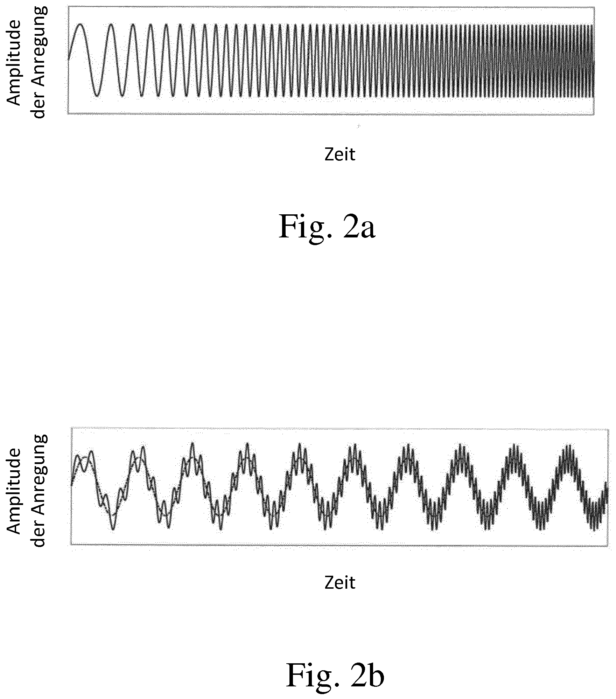

In Fig. 2a,b ist der zeitliche Verlauf der Anregespannung eines Piezoelements dargestellt, welches eine mechanisch schwingfähige Einheit 2 anregt.

In Fig. 2a ist hierbei die sinusförmige Anregespannung dargestellt, welche vom Überprüfungszweig 32 mit der sich zeitlich ändernder Frequenz vorgegeben wird, wobei die zeitliche Änderung der Frequenz anhand einer stetigen Frequenz/Zeit Funktion beschrieben wird. Stetig ist im Sinne dieser Anmeldung ist so zu verstehen, dass die Änderung der Anregefrequenz näherungsweise kontinuierlich bzw. stufenlos geschieht.

In Fig. 2b ist eine Anregespannung dargestellt, wobei auf die Anregung mit einer konstanten Frequenz eine Anregung mit einer sich zeitlich kontinuierlich ändernden Frequenz aufmoduliert ist. Diese Anregespannung liegt in der Variante der Erfindung vor, in der ein Addierer aus der Anregespannung des Messzweiges 31 und der Anregespannung des Überprüfungszweiges 32 eine gemeinsame Anregespannung erzeugt.

Dies ist also die Anregespannung eines Ausführungsbeispiels der besonders vorteilhaften Variante der Erfindung, in der die Überwachung möglicher Fehlfunktionen (F1,F2,..) simultan zur Bestimmung und/oder Überwachung der Prozessgröße erfolgt.

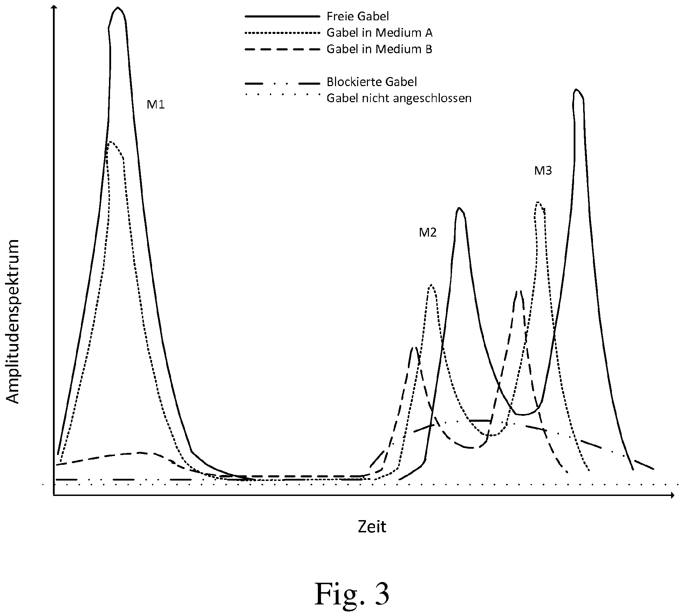

In Fig. 3 ist ein Beispiel dargestellt, wie anhand der Gestalt der empfangenen Schwingungen des Überprüfungszweiges 32 mindestens eine Fehlfunktion detektiert werden kann. Dafür ist hier das Amplitudenspektrum abgebildet, in dem die Amplitude der empfangenen Schwingung des Schwingungssystems bestehend aus der mechanisch schwingfähigen Einheit 2 (hier eine Schwinggabel) und Anrege-/Empfangseinheit 1 (hier ein Piezoelement) als Funktion der Zeit aufgetragen ist. Die Amplitude entspricht dabei der Schwingung der Schwinggabel bei einer durch den variablen Frequenzfilter 322 gefilterten Frequenz. Die Frequenz entspricht dabei gerade derjenigen Frequenz, die vom Überprüfungszweig 32 als Anregefrequenz an die Anrege-/Empfangseinheit 1 der Schwinggabel übergeben wird. Je nach Ausgestaltung der Erfindung wird anhand des Spitzenwertgleichrichters 323 oder anhand des Microcontrollers 321 und der Regel-/Auswerteeinheit 3 aus dem zeitlichen Verlauf der Absolutwerte der Amplitude der empfangenen Schwingungen des Überprüfungszweiges 32 die den zeitlichen Verlauf der Absolutwerte einhüllende Funktion gebildet. Diese einhüllende Funktion ist als Amplitudenspektrum aufgetragen.

Die hier gewählte Frequenz/Zeit Funktion ist eine stetige, streng monotone Funktion. Eine streng monotone Funktion bedeutet, dass die Frequenz immer entweder kontinuierlich größer oder kontinuierlich kleiner wird. In einer alternativen Ausgestaltung der Erfindung kann die Frequenz/Zeit Funktion auch nacheinander verschiedene, voneinander getrennte Frequenzbereiche durchlaufen. In diesem Ausführungsbeispiel ist die zum Durchlaufen der Frequenz/Zeit Funktion benötigte Zeit kürzer als 10s; diese Zeitspanne ist geeignet, um in der Anwendung eine zügige Überprüfung durchzuführen, insbesondere in der besonders bevorzugten Variante der Erfindung, in der die Überwachung möglicher Fehlfunktionen F1,F2,.. simultan zur Bestimmung und/oder Überwachung der Prozessgröße erfolgt.

Die hier gezeigte Wahl für die Ausgestaltung der Frequenz/Zeit Funktion und die Start- bzw. Endfrequenz wurde vom Fachmann für das gewählte Schwingungssystem, d.h. in Abhängigkeit der gewählten Schwinggabel, des anregenden Piezoelements und der möglichen Fehlfunktionen F1, F2,.. getroffen. Dabei ist beispielsweise als Startfrequenz der Frequenz/Zeit Funktion die kleinste Mode bzw. die Grundmode M1 der mechanisch schwingfähigen Einheit 2 gewählt, während als Endfrequenz die größte Mode Mi gewählt ist, welche für die Detektion einer möglichen Fehlfunktion F1, F2,.. relevant ist. Werden andere vibronische Sensoren verwendet werden, ist es möglich, durch eine Testreihe und unter Herbeiführung der zu beobachtenden Fehlfunktion F1, F2,... die dafür sensitive/n Mode/n M1, M2,... herauszufinden, um so das von der Frequenz/Zeit Funktion zu durchlaufende Frequenzband sowie die Änderungsrate festzulegen.

Anhand der Frequenz/Zeit Funktion lässt sich die Zeitachse auch in eine entsprechende Frequenzachse umskalieren, um so die beobachteten Überhöhungen bekannten Moden M1, M2,... der Schwinggabel zuzuordnen. In dem hier gezeigten Ausführungsbeispiel der Erfindung ist deutlich erkennbar, dass das derartig gewonnene Spektrum die nötigen Informationen enthält, um anhand der für den jeweiligen vibronischen Sensor vorgegebener Kriterien mindestens zwei unterschiedliche Fehlfunktionen F1, F2,... zu bestimmten.

Gezeigt ist das Schwingungssystem ohne Fehlfunktion F1, F2,... einmal für die Schwinggabel ohne Kontakt mit dem Medium, einmal für ein Medium A mit einer vorgegebenen Viskosität und Dichte, und einmal für ein Medium B, welches eine vom Medium A verschiedene Viskosität und/oder Dichte aufweist. Die gewählte Viskosität des Mediums B ist dabei in dem hier gezeigten Fall außerordentlich hoch. In der Praxis wird die hier gezeigte Schwinggabel typischerweise für Medien eingesetzt, deren Viskosität wesentlich kleiner als die des Mediums B ist, so dass das Medium B einen Grenzfall für den Fall eines hoch-viskosen Mediums darstellt. Bei der gewählten vorgegebenen Frequenz/Zeit Funktion sind die Amplituden bei den Moden M1, M2, M3 der Schwinggabel in allen diesen drei Fällen deutlich erkennbar.

Des Weiteren ist das Spektrum für eine nicht angeschlossene Schwinggabel gezeigt, welches sich deutlich von den drei gezeigten Fällen eines voll funktionstüchtigen Schwingungssystems unterscheidet, da über die gesamte Zeitspanne bzw. das gesamte Frequenzband keine Moden Mi (i=1,...) ausgebildet werden.

Weiterhin ist erkennbar, dass für das hoch-viskose Medium B erst bei den Moden M2 und M3 ein deutlicher Unterschied zwischen einer blockierten Schwinggabel und einer nicht angeschlossenen Schwinggabel erkennbar ist. Es lassen sich in dieser Ausgestaltung der Erfindung daher geeignete Kriterien definieren, um eine funktionstüchtige Gabel in verschiedenen Medien von einer nicht-angeschlossenen Gabel bei Kabelbruch (gepunktete-gestrichelte Linie) sowie eine blockierte Gabel (gepunktete Linie) zu unterscheiden. Liegen im durchlaufenen Frequenzbereich der Frequenz/Zeit Funktion solche Moden M1, M2,... die unterschiedlich auf Ansatz bzw. Korrosion reagieren, kann aus der Lage der Frequenzen zueinander anhand eines geeigneten Kriteriums noch zusätzlich Ansatz bzw. Korrosion detektiert werden.

In dem hier gezeigten Ausführungsbeispiel der Erfindung können somit mindestens zwei unterschiedliche Fehlfunktionen F1, F2 sicher erkannt und sogar voneinander unterschieden werden, nämlich eine Blockierung der Schwinggabel und ein Kabelbruch zwischen Schwinggabel und Anrege-/Empfangseinheit 1.

### Bezugszeichenliste

- 1: Anrege-/Empfangseinheit
- 2: mechanisch schwingfähige Einheit
- 3: Regel-/Auswerteeinheit
- 31: Messzweig
- 32: Überprüfungszweig
- 321: Microcontroller
- 322: variabler Frequenzfilter
- 323: Spitzenwertgleichrichter
- 4: Schalter

- F1,F2,...: Fehlfunktionen der mechanisch schwingfähige Einheit und/oder der Anrege-/Empfangseinheit
- M1,M2,...: Moden der mechanisch schwingfähigen Einheit

## Patentansprüche

1. Vorrichtung zur Bestimmung und/oder Überwachung der Viskosität, der Dichte und/oder eines vorbestimmten Füllstandes eines Mediums in einem Behälter, einem Tank oder einer Rohrleitung, wobei es sich bei dem Medium um eine Flüssigkeit oder ein feststoffliches, pulvriges oder körniges Medium handelt,
mit einer Anrege-/Empfangseinheit (1), die eine mechanisch schwingfähige Einheit (2) zu mechanischen Schwingungen anregt,
wobei eine mit der Anrege-/Empfangseinheit (1) verbundene Regel-/Auswerteeinheit (3) mit einem Messzweig (31) vorhanden ist,
wobei der Messzweig (31) dazu ausgestaltet ist, die Anrege-/Empfangseinheit (1) mit einem Anregesignal zu beaufschlagen, die Schwingungen der mechanisch schwingfähigen Einheit (2) zu empfangen, und aus den empfangenen Schwingungen die Viskosität, die Dichte und/oder den vorbestimmten Füllstand zu bestimmen und/oder zu überwachen,
**dadurch gekennzeichnet, dass**
ein von dem Messzweig getrennter Überprüfungszweig (32) vorhanden ist, der dazu ausgestaltet ist, die Anrege-/Empfangseinheit (1) mit einem Anregesignal zu beaufschlagen, die Schwingungen der mechanisch schwingfähigen Einheit (2) zu empfangen, und aus den empfangenen Schwingungen mindestens eine erste und eine davon verschiedene zweite Fehlfunktion (F1, F2, ...) der mechanisch schwingfähigen Einheit (2) und/oder der Anrege-/Empfangseinheit (1) zu bestimmen,
wobei das Anregesignal des Überprüfungszweiges (32) eine sich kontinuierliche ändernde Frequenz aufweist, die durch eine Frequenz/Zeit Funktion beschrieben wird und mehrere Moden (M1, M2, ...) der mechanisch schwingfähigen Einheit (2) durchläuft.

2. Vorrichtung nach Anspruch 1,
wobei der Überprüfungszweig (32) einen Microcontroller (321) aufweist,
wobei der Microcontroller (321) dazu ausgestaltet ist,
die sich kontinuierlich ändernde Frequenz des Anregesignals zu steuern.

3. Vorrichtung nach Anspruch 2,
wobei der Microcontroller (321) dazu ausgestaltet ist, aus den empfangenen Schwingungen die Schwingungen mit der Frequenz des Anregesignals herauszufiltern.

4. Vorrichtung nach Anspruch 3,
wobei der Microcontroller (321) und die Regel-/Auswerteeinheit (3) dazu ausgestaltet sind
- aus den zu der vorgegebenen Frequenz gehörenden empfangenen Schwingungen den Absolutwert der Amplitude zu bestimmen und
- aus dem Absolutwert der Amplitude und der vorgegebenen Frequenz/Zeit Funktion eine einhüllende Funktion zu erstellen,
wobei die Regel-/Auswerteeinheit (3) anhand der einhüllenden Funktion und/oder der Phase der empfangenen Schwingung und der vorgegebenen Frequenz/Zeit Funktion die mindestens zwei verschiedenen Fehlfunktionen (F1, F2, ...) der mechanisch schwingfähigen Einheit (2) und/oder der Anrege-/Empfangseinheit (1) bestimmt.

5. Vorrichtung nach zumindest einem der vorherigen Ansprüche,
wobei der Überprüfungszweig (32) einen variablen Frequenzfilter (322) aufweist,
wobei der variable Frequenzfilter (322) dazu ausgestaltet ist,
aus den empfangenen Schwingungen die Schwingungen einer vorgegebenen Frequenz herauszufiltern,
und wobei der Microcontroller (321) dazu ausgestaltet ist,
dem variablen Frequenzfilter (322) die Frequenz des Anregesignals als die zu filternde Frequenz vorzugeben.

6. Vorrichtung nach Anspruch 5 ,
wobei dem Frequenzfilter (322) des Überprüfungszweiges (32) ein Spitzenwertgleichrichter (323) nachgeschaltet ist,
und wobei die Regel-/Auswerteeinheit (3) dazu ausgestaltet ist,
anhand der durch den Spitzenwertgleichrichter (323) ermittelten Werte und der vorgegebenen Frequenz/Zeit-Funktion die mindestens zwei verschiedenen Fehlfunktionen (F1, F2, ...) der mechanisch schwingfähigen Einheit (2) und/oder der Anrege-/Empfangseinheit (1) zu bestimmen.

7. Vorrichtung nach zumindest einem der vorherigen Ansprüche 1-6,
wobei sich ein Schalter (4) zwischen der Anrege-/Empfangseinheit (1) und der Regel-/Auswerteeinheit (3) befindet und der Schalter (4) von der Regel-/Auswerteeinheit (3) so angesteuert wird,
dass er die Anrege-/Empfangseinheit (1) jeweils entweder mit dem Messzweig (31) oder mit dem Überprüfungszweig (32) verbindet.

8. Vorrichtung nach zumindest einem der vorherigen Ansprüche 1-6,
wobei sich ein Addierer zwischen der Anrege-/Empfangseinheit (1) und der Regel-/Auswerteeinheit (3) befindet und der Addierer so ausgestaltet ist,
dass er aus dem Anregesignal des Messzweiges (31) und dem Anregesignal des Überprüfungszweiges (32) ein gemeinsames Anregesignal erzeugt, dass die Anrege-/Empfangseinheit (1) steuert.

9. Vorrichtung nach zumindest einem der vorherigen Ansprüche,
wobei es sich bei zumindest einer der mindestens zwei Fehlfunktionen (F1, F2, ...) um eine Fehlfunktion (F1,...) der mechanisch schwingfähigen Einheit (2) handelt,
wobei es sich bei der Fehlfunktion (F1,...) der mechanisch schwingfähigen Einheit (2) um Ansatz, Korrosion und/oder Abrasion an der mechanisch schwingfähigen Einheit (2) handelt.

10. Vorrichtung nach zumindest einem der vorherigen Ansprüche,
wobei es sich bei der mechanisch schwingfähigen Einheit (2) um eine Schwinggabel mit zwei Zinken handelt,
und wobei es sich bei einer der mindestens zwei Fehlfunktionen (F1, F2, ...) um eine Blockierung der beiden Zinken und/oder eine Verbiegung von zumindest einem der beiden Zinken handelt.

11. Vorrichtung nach zumindest einem der vorherigen Ansprüche,
wobei es sich bei der mechanisch schwingfähigen Einheit (2) um eine Membran handelt, und wobei es sich bei einer der mindestens zwei Fehlfunktionen (F1, F2, ...) um einen Riss in der Membran und/oder eine Perforation der Membran handelt.

12. Vorrichtung nach zumindest einem der vorherigen Ansprüche,
wobei es sich bei der Anrege-/Empfangseinheit (1) um mindestens ein Piezoelement handelt,
und wobei es sich bei einer der mindestens zwei Fehlfunktionen (F1, F2, ...) um einen Bruch des Piezoelements, eine Depolarisation des Piezoelements, und/oder eine falsche elektrische Vorspannung des Piezoelements handelt.

13. Vorrichtung nach zumindest einem der vorherigen Ansprüche,
wobei die Anrege-/Empfangseinheit (1) an die mechanische schwingfähige Einheit geklebt ist,
und wobei es sich bei einer der mindestens zwei Fehlfunktionen (F1, F2, ...) um eine Ablösung der Klebestelle handelt.

14. Vorrichtung nach zumindest einem der vorherigen Ansprüche,
wobei die Anrege-/Empfangseinheit (1) durch mindestens ein Kabel und/oder einen Stecker mit der Elektronikeinheit verbunden ist,
und wobei es sich bei einer der mindestens zwei Fehlfunktionen (F1, F2, ...) um einen Bruch und/oder einen Isolationsdefekt des mindestens einen Kabels und oder Steckers zwischen Anrege-/Empfangseinheit (1) und/oder der Elektronikeinheit handelt.

15. Vorrichtung nach zumindest einem der vorherigen Ansprüche,
wobei es sich bei einer der mindestens zwei Fehlfunktionen (F1, F2, ...) um einen Kurzschluss und/oder Kondensation an der Anrege-/Empfangseinheit (1) handelt.

## Claims

1. Apparatus for determining and/or monitoring the viscosity, density and/or a predefined level of a medium in a vessel, a tank or a pipe, wherein the medium is a liquid or a solid, powder or granular medium,
with an excitation/reception unit (1) which excites a unit capable of vibrating mechanically (2) to perform mechanical vibrations,
wherein a control/evaluation unit (3) which is connected to the excitation/reception unit (1) is present with a measuring branch (31),
wherein the measuring branch (31) is designed to apply an excitation signal to the excitation/reception unit (1), to receive the vibrations of the unit capable of vibrating mechanically (2) and to determine and/or monitor the viscosity, the density and/or the predefined level from the vibrations received,
**characterized**
**in that** a verification branch (32) separate from the measuring branch is provided, wherein said verification branch is designed to apply an excitation signal to the excitation/reception unit (1), to receive the vibrations of the unit capable of vibrating mechanically (2) and to determine, on the basis of the vibrations received, at least a first malfunction and a second malfunction (F1, F2, ...), which is different to the first malfunction, of the unit capable of vibrating mechanically (2) and/or of the excitation/reception unit (1),
wherein the excitation signal of the verification branch (32) has a continuously variable frequency, which is described by a frequency/time function and which passes through several modes (M1, M2, ...) of the unit capable of vibrating mechanically (2).

2. Apparatus as claimed in Claim 1,
wherein the verification branch (32) comprises a microcontroller (321), wherein the microcontroller (321) is designed to control the continuously variable frequency of the excitation signal.

3. Apparatus as claimed in Claim 2,
wherein - from the vibrations received - the microcontroller (321) is designed to filter the vibrations with the frequency of the excitation signal,

4. Apparatus as claimed in Claim 3,
wherein the microcontroller (321) and the control/evaluation unit (3) are designed
- to determine the absolute value of the amplitude from the vibrations received that belong to the predefined frequency and
- to generate an enveloping function from the absolute value of the amplitude and the predefined frequency/time function,
wherein, on the basis of the enveloping function and/or the phase of the received vibration and the predefined frequency/time function, the control/evaluation unit (3) determines the at least two different malfunctions (F1, F2, ...) of the unit capable of vibrating mechanically (2) and/or of the excitation/reception unit (1).

5. Apparatus as claimed in at least one of the previous claims,
wherein the verification branch (32) comprises a variable frequency filter (322), wherein said variable frequency filter (322) is designed to filter the vibrations of a predefined frequency from the vibrations received,
and wherein the microcontroller (321) is designed to specify - to the variable frequency filter (322) - the frequency of the excitation signal as the frequency to be filtered.

6. Apparatus as claimed in Claim 5,
wherein a peak detector (323) is integrated downstream from the frequency filter (322) of the verification branch (32),
and wherein the control/evaluation unit (3) is designed to determine the at least two different malfunctions (F1, F2, ...) of the unit capable of vibrating mechanically (2) and/or of the excitation/reception unit (1) on the basis of the values determined by the peak detector (323) and the predefined frequency/time function.

7. Apparatus as claimed in at least one of the previous Claims 1 to 6,
wherein a switch (4) is located between the excitation/reception unit (1) and the control/evaluation unit (3), and the switch (4) is activated by the control/evaluation unit (3) in such a way that it connects the excitation/reception unit (1) to the measuring branch (31) or to the verification branch (32).

8. Apparatus as claimed in at least one of the previous Claims 1 to 6,
wherein an adder is situated between the excitation/reception unit (1) and the control/evaluation unit (3) and the adder is configured in such a way to generate a common excitation signal from the excitation signal of the measuring branch (31) and from the excitation signal of the verification branch (32), wherein said excitation signal controls the excitation/reception unit (1).

9. Apparatus as claimed in at least one of the previous claims,
wherein at least one of the at least two malfunctions (F1, F2, ...) is a malfunction (F1, ...) of the unit capable of vibrating mechanically (2),
wherein the malfunction (F1, ...) of the unit capable of vibrating mechanically (2) is a deposit, a corrosion and/or an abrasion on the unit capable of vibrating mechanically (2).

10. Apparatus as claimed in at least one of the previous claims,
wherein the unit capable of vibrating mechanically (2) is a tuning fork with two tines, and wherein one of the at least two malfunctions (F1, F2, ...) is a blockage of the two tines and/or a bending of at least one of the two tines.

11. Apparatus as claimed in at least one of the previous claims,
wherein the unit capable of vibrating mechanically (2) is a membrane,
and wherein one of the at least two malfunctions (F1, F2, ...) is a crack in the membrane and/or a perforation of the membrane.

12. Apparatus as claimed in at least one of the previous claims,
wherein the excitation/reception unit (1) is at least a piezoelectric element,
and wherein one of the at least two malfunctions (F1, F2, ...) is a rupture of the piezoelectric element, a depolarization of the piezoelectric element and/or a wrong electrical bias of the piezoelectric element.

13. Apparatus as claimed in at least one of the previous claims,
wherein the excitation/reception unit (1) is stuck to the unit capable of vibrating mechanically,
and wherein one of the least two malfunctions (F1, F2, ...) is the detachment of the adhesive joint.

14. Apparatus as claimed in at least one of the previous claims,
wherein the excitation/reception unit (1) is connected to the electronic unit by at least a cable and/or a plug,
and wherein one of the at least two malfunctions (F1, F2, ...) is a break and/or an insulation defect of the at least one cable and/or plug between the excitation/reception unit (1) and/or the electronic unit.

15. Apparatus as claimed in at least one of the previous claims,
wherein one of the at least two malfunctions (F1, F2, ...) is a short-circuit and/or condensation at the excitation/reception unit (1).

## Revendications

1. Dispositif destiné à la détermination et/ou à la surveillance de la viscosité, de la densité et/ou d'un niveau prédéfini d'un produit dans un réservoir, une cuve ou une conduite, le produit étant un liquide ou un produit solide, pulvérulent ou granuleux,
avec une unité d'excitation / de réception (1) qui excite une unité apte à vibrer mécaniquement (2) en vibrations mécaniques,
une unité de régulation / d'exploitation (3) reliée à l'unité d'excitation / de réception (1) étant présente avec une branche de mesure (31),
la branche de mesure (31) étant conçue pour appliquer un signal d'excitation à l'unité d'excitation / de réception (1), pour recevoir les vibrations de l'unité apte à vibrer mécaniquement (2) et pour déterminer et/ou surveiller la viscosité, la densité et/ou le niveau prédéfini à partir des vibrations reçues,
**caractérisé**
**en ce qu'**un branche de vérification (32) séparée de la branche de mesure est présente, laquelle branche de vérification est conçue pour appliquer un signal d'excitation à l'unité d'excitation / de réception (1), pour recevoir les vibrations de l'unité apte à vibrer mécaniquement (2) et pour déterminer à partir des vibrations reçues au moins un premier et un deuxième dysfonctionnement (F1, F2, ...) de l'unité apte à vibrer mécaniquement (2) et/ou de l'unité d'excitation / de réception (1),
le signal d'excitation de la branche de vérification (32) présentant une fréquence continuellement variable, décrite par une fonction fréquence/temps et passant par plusieurs modes (M1, M2, ...) de l'unité apte à vibrer mécaniquement (2).

2. Dispositif selon la revendication 1,
pour lequel la branche de vérification (32) comprend un microcontrôleur (321), le microcontrôleur (321) étant conçu pour commander la fréquence continuellement variable du signal d'excitation.

3. Dispositif selon la revendication 2,
pour lequel le microcontrôleur (321) est conçu pour filtrer à partir des vibrations reçues les vibrations avec la fréquence du signal d'excitation,

4. Dispositif selon la revendication 3,
pour lequel le microcontrôleur (321) et l'unité de régulation / d'exploitation (3) sont conçus
- pour déterminer la valeur absolue de l'amplitude à partir des vibrations reçues appartenant à la fréquence prédéfinie et
- pour générer une fonction d'enveloppement à partir de la valeur absolue de l'amplitude et de la fonction fréquence/temps prédéfinie,
l'unité de régulation / d'exploitation (3) déterminant les au moins deux dysfonctionnements différents (F1, F2, ...) de l'unité apte à vibrer mécaniquement (2) et/ou de l'unité d'excitation / de réception (1) sur la base de la fonction d'enveloppement et/ou de la phase de la vibration reçue et de la fonction fréquence/temps prédéfinie.

5. Dispositif selon au moins l'une des revendications précédentes,
pour lequel la branche de vérification (32) comprend un filtre à fréquence variable (322), lequel filtre à fréquence variable (322) est conçu pour filtrer les vibrations d'une fréquence prédéfinie à partir des vibrations reçues,
et pour lequel le microcontrôleur (321) est conçu pour spécifier, au filtre à fréquence variable (322), la fréquence du signal d'excitation en tant que fréquence à filtrer.

6. Dispositif selon la revendication 5,
pour lequel un redresseur de valeur de crête (323) est monté en aval du filtre de fréquence (322) de la branche de vérification (32),
et pour lequel l'unité de régulation / d'exploitation (3) est conçue pour déterminer les au moins deux dysfonctionnements différents (F1, F2, ...) de l'unité apte à vibrer mécaniquement (2) et/ou de l'unité d'excitation / de réception (1) sur la base des valeurs déterminées par le redresseur de valeur de crête (323) et de la fonction fréquence/temps prédéfinie.

7. Dispositif selon au moins l'une des revendications précédentes 1 à 6,
pour lequel un commutateur (4) est situé entre l'unité d'excitation / de réception (1) et l'unité de régulation / d'exploitation (3), et le commutateur (4) est actionné par l'unité de régulation / d'exploitation (3) de telle sorte qu'il relie l'unité d'excitation / de réception (1) à la branche de mesure (31) ou à la branche de vérification (32).

8. Dispositif selon au moins l'une des revendications précédentes 1 à 6,
pour lequel un additionneur est situé entre l'unité d'excitation / de réception (1) et l'unité de régulation / d'exploitation (3) et l'additionneur est configuré de telle sorte qu'il génère un signal d'excitation commun à partir du signal d'excitation de la branche de mesure (31) et du signal d'excitation de la branche de vérification (32), lequel signal d'excitation commande l'unité d'excitation / de réception (1).

9. Dispositif selon au moins l'une des revendications précédentes,
pour lequel au moins l'un des au moins deux dysfonctionnements (F1, F2, ...) est un dysfonctionnement (F1, ...) de l'unité apte à vibrer mécaniquement (2),
pour lequel le dysfonctionnement (F1, ...) apte à vibrer mécaniquement (2) est un dépôt, une corrosion et/ou une abrasion sur l'unité apte à vibrer mécaniquement (2).

10. Dispositif selon au moins l'une des revendications précédentes,
pour lequel l'unité apte à vibrer mécaniquement (2) est une fourche vibrante à deux tiges, et pour lequel l'un des au moins deux dysfonctionnements (F1, F2, ...) est un blocage des deux tiges et/ou une flexion d'au moins l'une des deux tiges.

11. Dispositif selon au moins l'une des revendications précédentes,
pour lequel l'unité apte à vibrer mécaniquement (2) est une membrane,
et pour lequel l'un des au moins deux dysfonctionnements (F1, F2, ...) est une déchirure de la membrane et/ou une perforation de la membrane.

12. Dispositif selon au moins l'une des revendications précédentes,
pour lequel l'unité d'excitation / de réception (1) est au moins un élément piézoélectrique, et pour lequel l'un des au moins deux dysfonctionnements (F1, F2, ...) est une rupture de l'élément piézoélectrique, une dépolarisation de l'élément piézoélectrique et/ou une mauvaise polarisation électrique de l'élément piézoélectrique.

13. Dispositif selon au moins l'une des revendications précédentes,
pour lequel l'unité d'excitation / de réception (1) est collée à l'unité apte à vibrer mécaniquement,
et pour lequel l'un des au moins deux dysfonctionnements (F1, F2, ...) est un détachement du joint collé.

14. Dispositif selon au moins l'une des revendications précédentes,
pour lequel l'unité d'excitation / de réception (1) est reliée à l'unité électronique par au moins un câble et/ou un connecteur,
et pour lequel l'un des au moins deux dysfonctionnements (F1, F2, ...) est une rupture et/ou un défaut d'isolation de l'au moins un câble et/ou connecteur entre l'unité d'excitation / de réception (1) et/ou l'unité électronique.

15. Dispositif selon au moins l'une des revendications précédentes,
pour lequel l'un des au moins deux dysfonctionnements (F1, F2, ...) est un court-circuit et/ou une condensation au niveau de l'unité d'excitation / de réception (1).
